# FASCICULE DE BREVET EUROPEEN

(11) **EP 4 031 383 B1**
(45) Date de publication et mention de la délivrance du brevet: **04.03.2026**
(21) Numéro de dépôt: 20820255.6
(22) Date de dépôt: 17.09.2020
(51) Int. Cl.: B60C 1/00, C08F 210/02, C08L 47/00, C08K 3/36

(54) **COMPOSITION DE CAOUTCHOUC**
KAUTSCHUKZUSAMMENSETZUNG
RUBBER COMPOSITION

(30) Priorité: 18.09.2019 FR 1910301
(43) Date de publication de la demande: 27.07.2022
(73) Titulaire: COMPAGNIE GENERALE DES ETABLISSEMENTS MICHELIN, 63000 Clermont-Ferrand (FR)
(72) Inventeur: MORESO, Emma, 63040 CLERMONT-FERRAND Cedex 9 (FR); ARAUJO DA SILVA, José-Carlos, 63040 CLERMONT-FERRAND Cedex 9 (FR)
(74) Mandataire: M.F.P. Michelin
(86) Numéro de dépôt international: PCT/FR2020/051604
(87) Numéro de publication internationale: WO 2021/053296

(56) Documents cités:
- WO-A1-2018/189456
- WO-A1-2019/180355
- WO-A1-2019/180356

## Description

La présente invention concerne les compositions de caoutchouc diénique destinées à être utilisées dans un pneumatique qui contiennent majoritairement à titre d'élastomère un copolymère d'éthylène et de 1,3-diène.

Les compositions de caoutchouc diénique traditionnellement utilisées dans le pneumatique sont des compositions de caoutchouc renforcées par des élastomères diéniques fortement insaturés comme les polybutadiènes, les polyisoprènes, les copolymères de butadiène et de styrène.

Il a été proposé, notamment dans le document WO 2014114607, d'utiliser des copolymères d'éthylène et de 1,3-butadiène dans des compositions de caoutchouc pour pneumatique. Ces copolymères sont synthétisés par copolymérisation d'éthylène et du 1,3-butadiène en présence d'un système catalytique comprenant un métallocène de terre rare. Les compositions de caoutchouc renforcées de copolymère d'éthylène et de 1,3-butadiène sont notamment décrites pour améliorer le compromis de performances d'un pneumatique que sont la résistance à l'usure et la résistance au roulement. Ces compositions de caoutchouc diénique une fois réticulées présentent une rigidité bien plus élevée que les compositions de caoutchouc diénique traditionnellement utilisées et peuvent donc s'avérer inappropriées pour certaines applications. Il existe donc un besoin de diminuer significativement la rigidité à cuit de telles compositions comprenant un caoutchouc diénique à base d'éthylène.

Il est connu de diminuer la rigidité à cuit d'une composition de caoutchouc diénique en diminuant la densité pontale de la composition de caoutchouc. Ce levier s'accompagne malheureusement aussi d'une augmentation de l'hystérèse de la composition de caoutchouc.

La Demanderesse a découvert une composition de caoutchouc renforcée à base d'un copolymère d'éthylène et de 1,3-diène qui ne présente pas les inconvénients mentionnés, puisqu'elle présente un compromis amélioré entre les propriétés de rigidité et d'hystérèse.

Ainsi un premier objet de l'invention est une composition de caoutchouc qui comprend une charge renforçante, un système de réticulation et plus de 50 pce à 100 pce d'un élastomère qui est un copolymère d'éthylène et d'un 1,3-diène de formule (I),

CH₂=CR-CH=CH₂ (l)

le symbole R représentant une chaîne hydrocarbonée ayant 3 à 20 atomes de carbone.

Un autre objet de l'invention est un pneumatique comportant une bande de roulement lequel pneumatique comprend une composition de caoutchouc conforme à l'invention, de préférence dans la bande de roulement.

### Description détaillée

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). L'abréviation "pce" signifie parties en poids pour cent parties en poids d'élastomère (du total des élastomères si plusieurs élastomères sont présents).

Par l'expression « à base de » utilisée pour définir les constituants d'un système catalytique ou d'une composition, on entend le mélange de ces constituants, ou le produit de la réaction d'une partie ou de la totalité de ces constituants entre eux.

Sauf indication contraire, les taux des unités résultant de l'insertion d'un monomère dans un copolymère sont exprimés en pourcentage molaire par rapport à la totalité des unités monomères du copolymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

Le 1,3-diène de formule (I) comme définie plus haut et utile aux besoins de l'invention étant un 1,3 diène substitué, le 1,3-diène peut donner lieu à des unités de configuration 1,2 représentée par la formule (1), de configuration 3,4 représentée par la formule (2) et de configuration 1,4 dont la forme trans est représentée ci-après par la formule (3).

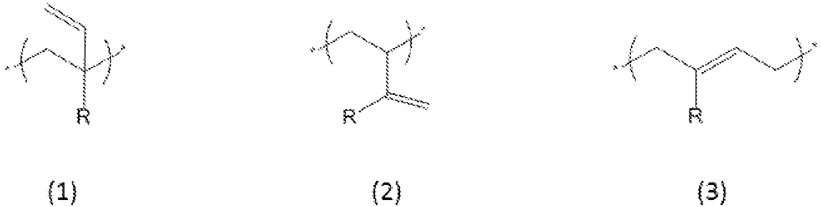

Comme cela est également bien connu, l'unité éthylène est une unité de motif -(CH₂-CH₂)-.

Le copolymère utile aux besoins de l'invention est un copolymère d'éthylène et du 1,3-diène, ce qui implique que les unités monomères du copolymère sont des unités résultant de la polymérisation de l'éthylène et du 1,3-diène. Le copolymère comprend donc des unités éthylène et des unités du 1,3-diène. Selon l'un quelconque des modes de réalisation de l'invention, le 1,3-diène est un seul composé, c'est-à-dire un seul (en anglais « one ») 1,3-diène de formule (I) ou est un mélange de 1,3-diènes de formule (I), les 1,3-diènes du mélange se différenciant les uns des autres par le groupe représenté par le symbole R. Le copolymère utile aux besoins de l'invention est avantageusement un copolymère statistique selon l'un quelconque des modes de réalisation de l'invention.

De préférence, le copolymère contient des unités éthylène qui représentent entre 50% et 95% en moles des unités monomères du copolymère, c'est-à-dire entre 50% et 95% en moles des unités éthylène et des unités du 1,3-diène. De manière très préférentielle, le copolymère contient des unités éthylène qui représentent au moins 60% en mole des unités éthylène et des unités du 1,3-diène. De manière plus préférentielle, le copolymère contient des unités éthylène qui représentent au moins 70% en mole des unités éthylène et des unités du 1,3-diène. De préférence, le copolymère contient des unités éthylène qui représentent au plus 90% en mole des unités éthylène et des unités du 1,3-diène.

Selon un mode de réalisation particulier de l'invention, le copolymère contient des unités éthylène qui représentent au plus 85% en mole des unités éthylène et des unités du 1,3-diène.

Selon un mode de réalisation préférentiel de l'invention, dans le copolymère conforme à l'invention, les unités éthylène représentent de 60 à 90% en mole des unités éthylène et des unités du 1,3-diène, avantageusement de 70 à 90% en mole des unités éthylène et des unités du 1,3-diène.

Selon un autre mode de réalisation particulier de l'invention, dans le copolymère conforme à l'invention, les unités éthylène représentent de 60 à 85% en mole des unités éthylène et des unités du 1,3-diène, avantageusement de 70 à 85% en mole des unités éthylène et des unités du 1,3-diène.

Dans la formule (I) du 1,3-diène, la chaîne hydrocarbonée représentée par le symbole R est une chaîne insaturée de 3 à 20 atomes de carbone. De préférence, le symbole R représente une chaîne hydrocarbonée ayant 6 à 16 atomes de carbone.

La chaîne hydrocarbonée représentée par le symbole R peut être une chaîne saturée ou insaturée. De préférence, le symbole R représente une chaîne aliphatique, auquel cas dans la formule (I) du 1,3-diène, la chaîne hydrocarbonée représentée par le symbole R est une chaîne hydrocarbonée aliphatique. Elle peut être une chaîne linéaire ou ramifiée, auquel cas le symbole R représente une chaîne linéaire ou ramifiée. De préférence, la chaîne hydrocarbonée est acyclique, auquel cas le symbole R représente une chaîne acyclique. Mieux, le symbole R représente une chaîne hydrocarbonée acyclique insaturée et ramifiée. La chaîne hydrocarbonée représentée par le symbole R est avantageusement une chaîne acyclique insaturée et ramifiée contenant de 3 à 20 atomes de carbone, en particulier de 6 à 16 atomes de carbone. Très avantageusement, le 1,3-diène est le myrcène ou le β-farnésène.

Selon un mode de réalisation préférentiel de l'invention, le 1,3-diène est le myrcène.

Selon un autre mode de réalisation préférentiel de l'invention, le 1,3-diène est le β-farnésène.

De préférence, le copolymère d'éthylène et du 1,3-diène présente une température de vitreuse inférieure à -35°C, de préférence comprise entre -90°C et -35°C.

Selon une première variante de l'invention, le copolymère contient des unités du 1,3-diène de configuration 1,2 ou 3,4 qui représentent plus de 50% en mole des unités du 1,3-diène. En d'autres termes, dans le copolymère les unités du 1,3-diène sont à plus de 50% en mole des unités de configuration 1,2 ou de configuration 3,4. Dans cette variante, le complément à 100% en mole des unités du 1,3-diène dans le copolymère est constitué tout ou partie d'unités du 1,3-diène de configuration 1,4. Selon cette première variante, préférentiellement plus de la moitié des unités du 1,3-diène de configuration 1,4 sont de configuration 1,4-trans, plus préférentiellement toutes les unités du 1,3-diène de configuration 1,4 sont de configuration 1,4-trans.

Selon une deuxième variante de l'invention, dans le copolymère les unités du 1,3-diène sont à plus de 50% de configuration 1,4. En d'autre terme, les unités du 1,3-diène de configuration 1,4 représentent plus de 50% en mole des unités du 1,3-diène. Dans cette variante, le complément à 100% en mole des unités du 1,3-diène dans le copolymère est constitué tout ou partie d'unités du 1,3-diène de configuration 1,2 ou 3,4. De préférence, les unités du 1,3-diène de configuration 1,4 représentent plus de 70% en mole des unités du 1,3-diène. Avantageusement, les unités du 1,3-diène de configuration 1,4 sont pour plus de la moitié d'entre elles de configuration 1,4-trans, ce qui signifie que les unités du 1,3-diène de configuration 1,4-trans représentent plus de 50% en mole des unités du 1,3-diène de configuration 1,4.

Le copolymère peut être préparé par un procédé qui comprend la copolymérisation d'éthylène et du 1,3-diène en présence d'un système catalytique à base au moins d'un métallocène de formule (II) et d'un organomagnésien de formule (III)
Cp¹ et Cp², identiques ou différents, étant choisis dans le groupe constitué par le groupe cyclopentadiényle de formule C₅H₄, le groupe fluorényle non substitué de formule C₁₃H₈ et les groupes fluorényles substitués,
P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0,
L représentant un métal alcalin choisi dans le groupe constitué par le lithium, le sodium et le potassium,
N représentant une molécule d'un éther, de préférence diéthyléther ou tétrahydrofuranne,
R¹ et R², identiques ou différents, représentant un groupe carboné.

   p(Cp¹Cp²) Nd(BH₄)_{(1+y)-}L_{y}-Nₓ (II)

   MgR¹R² (III)

A titre de groupes fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les fluorènes substitués, parce que ces derniers sont disponibles commercialement ou facilement synthétisables.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

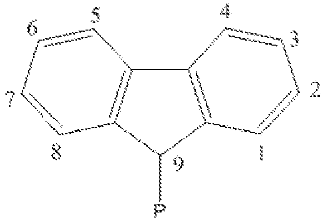

Le système catalytique peut être préparé de façon traditionnelle par un procédé analogue à celui décrit dans la demande de brevet WO 2007054224 ou WO 2007054223. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du copolymère conforme à l'invention.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, de l'organomagnésien et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un diène conjugué, l'éthylène ou un mélange d'éthylène et d'un diène conjugué. Le diène conjugué à titre de monomère de préformation est de préférence un 1,3-diène tel que le 1,3-butadiène, l'isoprène ou encore un 1,3-diène de formule (I), en particulier le myrcène ou le β-farnésène. Le système catalytique ainsi obtenu peut être utilisé de suite dans le procédé conforme à l'invention ou être stocké sous atmosphère inerte avant son utilisation dans le procédé conforme à l'invention.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

L'organomagnésien utile aux besoins de l'invention est de formule MgR¹R² dans laquelle R¹ et R², identiques ou différents, représentent un groupe carboné. On entend par groupe carboné un groupe qui contient un ou plusieurs atomes de carbone. De préférence, R¹ et R² contiennent 2 à 10 atomes de carbone. De manière plus préférentielle, R¹ et R² représentent chacun un alkyle. L'organomagnésien est avantageusement un dialkylmagnésien, mieux le butyléthylmagnésium ou le butyloctylmagnésium, encore mieux le butyloctylmagnésium.

Selon l'un quelconque des modes de réalisation de l'invention, le rapport molaire de l'organomagnésien sur le métal Nd constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

Lorsque le copolymère utile aux besoins de l'invention est un copolymère qui a une microstructure telle que définie selon la première variante de l'invention, il est préparé selon le procédé mentionné dans la présente demande en utilisant un métallocène de formule (II) dans laquelle Cp¹ et Cp², identiques ou différents, sont choisis dans le groupe constitué par les groupes fluorényles substitués et le groupe fluorényle non substitué de formule C₁₃H₈. Pour cette variante, conviennent en particulier les métallocènes de formules suivantes dans lesquelles le symbole Flu présente le groupe fluorényle de formule C₁₃H₈ : [{Me₂SiFlu₂Nd(µ-BH₄)₂Li(THF)}₂] ; [Me₂SiFlu₂Nd(µ-BH₄)₂Li(THF)] ; [Me₂SiFlu₂Nd(µ-BH₄)(THF)] ; [{Me₂SiFlu₂Nd(µ-BH₄)(THF)}₂] ; [Me₂SiFlu₂Nd(µ-BH₄)].

Lorsque le copolymère utile aux besoins de l'invention est un copolymère qui a une microstructure telle que définie selon la deuxième variante de l'invention, il est préparé selon le procédé mentionné dans la présente demande en utilisant un métallocène de formule (II) dans laquelle Cp¹ désigne un groupe cyclopentadiényle Cp de formule C₅H₄ et Cp² un groupe fluorényle Flu de formule C₁₃H₈.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. La copolymérisation est conduite typiquement dans des conditions anhydres et en l'absence d'oxygène, en présence éventuelle d'un gaz inerte. La température de polymérisation varie généralement dans un domaine allant de 30 à 150°C, préférentiellement de 30 à 120°C. De préférence, la copolymérisation est conduite à pression constante d'éthylène.

Au cours de la polymérisation de l'éthylène et du 1,3-diène dans un réacteur de polymérisation, un ajout continu d'éthylène et du 1,3-diène peut être réalisé dans le réacteur de polymérisation, auquel cas le réacteur de polymérisation est un réacteur alimenté. Ce mode de réalisation est tout particulièrement adapté pour la synthèse de copolymère statistique.

La polymérisation peut être stoppée par refroidissement du milieu de polymérisation. Le polymère peut être récupéré selon les techniques classiques connues de l'homme du métier comme par exemple par précipitation, par évaporation du solvant sous pression réduite ou par stripping à la vapeur d'eau.

La composition de caoutchouc selon l'invention comprend plus de 50 à 100 pce d'un copolymère d'éthylène et d'un 1,3-diène de formule (I) tel que défini dans l'un des quelconques modes de réalisation décrits précédemment, y compris leurs variantes. Il est entendu que le copolymère peut être constitué par un mélange de copolymères qui se différencient par leur microstructure ou par leur macrostructure. Lorsque le taux du copolymère d'éthylène et d'un 1,3-diène de formule (I) est supérieur à 50 pce et inférieur à 100 pce, le complément à 100 pce peut être assuré un autre élastomère, en particulier un autre élastomère diénique connu de l'homme du métier. Cet autre élastomère diénique peut être un élastomère conventionnellement utilisé dans les compositions de caoutchouc pour pneumatique tel que les polybutadiènes, les polyisoprènes, les copolymères de 1,3-butadiène et les copolymères d'isoprène. Selon un mode de réalisation préférentiel, la composition de caoutchouc comprend 100 pce d'un copolymère d'éthylène et d'un 1,3-diène de formule (I).

La composition de caoutchouc conforme à l'invention a pour autre caractéristique essentielle de comprendre une charge renforçante. La composition de caoutchouc peut comprendre tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Le taux de charge renforçante est ajustée par l'homme du métier en fonction de l'usage de la composition de caoutchouc. Selon un mode de réalisation de l'invention, le taux de charge renforçante dans la composition de caoutchouc est supérieur ou égal à 30 pce et inférieur ou égal à 150 pce, de préférence supérieur ou égal à 35 pce et inférieur ou égal à 100 pce. Ces plages de charge renforçante définies dans ce mode de réalisation permettent de conférer à la composition de caoutchouc un compromis amélioré entre ses propriétés de renforcement et de rigidité selon l'usage destiné de la composition de caoutchouc dans un pneumatique, notamment pour une bande de roulement.

La charge renforçante peut être une silice, un noir de carbone ou un mélange d'un noir de carbone et d'une silice. De préférence, la silice représente plus de 50% en masse de la charge renforçante. De manière plus préférentielle, la silice représente plus de 85% en masse de la charge renforçante.

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g. Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

La silice peut être un mélange de différentes silices, auquel cas les proportions de silice dans la charge renforçante se rapportent à l'ensemble des silices.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés.

Le noir de carbone peut être un mélange de différents noirs de carbone, auquel cas les taux de noir de carbone se rapportent à l'ensemble des noirs de carbone.

De préférence, le noir de carbone est utilisé à un taux inférieur ou égal à 20 pce, plus préférentiellement inférieur ou égal à 10 pce (par exemple le taux de noir de carbone peut être compris dans un domaine allant de 0,5 à 20 pce, notamment allant de 1 à 10 pce). Avantageusement, le taux de noir de carbone dans la composition de caoutchouc est inférieur ou égal à 5 pce. Dans les intervalles indiqués, on bénéficie des propriétés colorantes (agent de pigmentation noir) et anti-UV des noirs de carbone, sans pénaliser par ailleurs les performances typiques apportées par la silice.

Pour coupler la charge inorganique renforçante, en l'espèce la silice, à l'élastomère, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère, auquel cas la composition de caoutchouc comprend un agent de couplage pour lier la silice à l'élastomère. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère.

On utilise notamment des silanes polysulfurés, dits « symétriques » ou « asymétriques » selon leur structure particulière, tels que décrits par exemple dans les demandes WO03/002648-A1 (ou US2005/016651-A1) et WO03/002649-A1 (ou US2005/016650-A1). Conviennent en particulier, sans que la définition ci-après soit limitative, des silanes polysulfurés répondant à la formule générale (IV) suivante dans laquelle:

Z - A - Sₓ - A - Z (IV)

- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en un alkylène en C₁-C₄, en particulier le propylène) ;
- les symboles Z, identiques ou différents, répondent à l'une des trois formules ci-après : 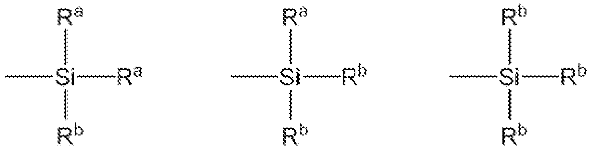 dans lesquelles :
   - les radicaux R^{a}, substitués ou non substitués, identiques ou différents entre eux, représentent un groupe alkyle en C₁-C₁₈, un groupe cycloalkyle en C₅-C₁₈ ou un groupe aryle en C₆-C₁₈ (de préférence des groupes alkyle en C₁-C₆, le cyclohexyle ou le phényle, notamment des groupes alkyle en C₁-C₄, plus particulièrement le méthyle et/ou l'éthyle),
   - les radicaux R^{b}, substitués ou non substitués, identiques ou différents entre eux, représentent un groupe alkoxyle en C₁-C₁₈ ou un groupe cycloalkoxyle en C₅-C₁₈ (de préférence un groupe choisi parmi les alkoxyles en C₁-C₈ et les cycloalkoxyles en C₅-C₈, plus préférentiellement encore un groupe choisi parmi les alkoxyles en C₁-C₄, en particulier le méthoxyle et l'éthoxyle), ou un groupe hydroxyle, ou tel que 2 radicaux Rb représentent un groupe dialkoxyle en C₃-C₁₈.

Dans le cas d'un mélange d'alkoxysilanes polysulfurés répondant à la formule (V) ci-dessus, notamment des mélanges usuels disponibles commercialement, la valeur moyenne des « x » est un nombre fractionnaire de préférence compris dans un domaine allant de 2 à 5, plus préférentiellement proche de 4.

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ commercialisé sous la dénomination « Si69 » par la société Evonik ou le disulfure de bis-(triéthoxysilylpropyle), en abrégé TESPD, de formule [(C₂H_{S}O)₃Si(CH₂)₃S]₂ commercialisé sous la dénomination « Si75 » par la société Evonik. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyle), plus particulièrement le tétrasulfure de bis-monoéthoxydiméthylsilylpropyle tel que décrit dans la demande de brevet WO02/083782-A1 précitée (ou US7217751-B2).

Bien entendu pourraient être également utilisés des mélanges des agents de couplage précédemment décrits.

La teneur en agent de couplage dans la composition de l'invention est avantageusement inférieure ou égale à 25 pce, étant entendu qu'il est en général souhaitable d'en utiliser le moins possible. Typiquement le taux d'agent de couplage représente de 0,5% à 15% en poids par rapport à la quantité de charge inorganique renforçante. Son taux est préférentiellement compris dans un domaine allant de 0,5 à 20 pce, plus préférentiellement compris dans un domaine allant de 3 à 15 pce. Ce taux est aisément ajusté par l'homme du métier selon le taux de charge inorganique renforçante utilisé dans la composition de l'invention.

Le système de réticulation utile aux besoins de l'invention est préférentiellement un système de vulcanisation, c'est-à-dire à base de soufre et d'un accélérateur primaire de vulcanisation. Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formés au cours de la vulcanisation et pontant les chaînes élastomères. Au système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce. Ces taux préférentiels peuvent s'appliquer à l'un quelconque des modes de réalisation de l'invention.

On peut utiliser comme accélérateur de vulcanisation (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types sulfénamides pour ce qui est des accélérateurs primaires, du type thiurames, dithiocarbamates, dithiophosphates, thiourées et xanthates pour ce qui est des accélérateurs secondaires.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

La composition de caoutchouc conforme à l'invention peut comporter également tout ou partie des additifs usuels habituellement utilisés dans les compositions d'élastomères destinées à la fabrication de pneumatiques, notamment des pigments, des agents de protection tels que cires anti-ozone, anti-ozonants chimiques, anti-oxydants, des plastifiants.

Selon un mode de réalisation particulier de l'invention, la composition de caoutchouc comprend en outre un plastifiant. Le taux de plastifiant dans la composition de caoutchouc peut varier dans une large mesure, en particulier selon le taux de charge renforçante dans la composition de caoutchouc et selon la nature du plastifiant utilisé. De préférence, il est supérieur à 10 pce et inférieur ou égal à 100 pce, de préférence supérieur ou égal à 30 pce et inférieur ou égal à 90 pce.

Selon un mode de réalisation particulièrement préférentiel de l'invention, la composition de caoutchouc comprend à titre de plastifiant une résine hydrocarbonée. Ce mode de réalisation est particulièrement préférentiel pour une utilisation de la composition de caoutchouc dans une bande de roulement. Les résines hydrocarbonées, appelées aussi résines plastifiantes hydrocarbonées, sont des polymères bien connus de l'homme du métier, essentiellement à base de carbone et hydrogène mais pouvant comporter d'autres types d'atomes, par exemple l'oxygène, utilisables en particulier comme agents plastifiants ou agents tackifiants dans des matrices polymériques. Elles sont par nature au moins partiellement miscibles (i.e., compatibles) aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). De manière connue, ces résines hydrocarbonées peuvent être qualifiées aussi de résines thermoplastiques en ce sens qu'elles se ramollissent par chauffage et peuvent ainsi être moulées. Le point de ramollissement des résines hydrocarbonées est mesuré selon la norme ISO 4625 (méthode "Ring and Ball"). La Tg est mesurée selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). De préférence, la résine plastifiante hydrocarbonée a une température de transition vitreuse supérieure à 20°C.

Avantageusement, la résine plastifiante hydrocarbonée présente au moins une quelconque des caractéristiques suivantes, plus préférentiellement toutes :
- une Tg supérieure à 30°C ;
- une masse moléculaire moyenne en nombre (Mn) comprise entre 300 et 2000 g/mol, plus préférentiellement entre 400 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

De préférence, la résine plastifiante hydrocarbonée est choisie dans le groupe constitué par les résines d'homopolymère de cyclopentadiène, les résines de copolymère de cyclopentadiène, les résines d'homopolymère de dicyclopentadiène, les résines de copolymère de dicyclopentadiène, les résines d'homopolymère de terpène, les résines de copolymère de terpène, les résines d'homopolymère de coupe C5, les résines de copolymère de coupe C5, les résines d'homopolymère de coupe C9, les résines de copolymère de coupe C9, les résines hydrogénées d'homopolymère de cyclopentadiène et les résines hydrogénées de copolymère de cyclopentadiène.

De manière plus préférentielle, la résine plastifiante hydrocarbonée est une résine de copolymère de coupe C9 ou une résine de copolymère de dicyclopentadiène, hydrogénée ou non. A titre d'exemple, on peut citer tout particulièrement les résines de copolymères de coupe C9 et de dicyclopentadiène hydrogénée.

A titre de plastifiant utile aux besoins de l'invention, on peut aussi citer les agents plastifiants liquides hydrocarbonés connus pour ramollir une composition de caoutchouc en diluant l'élastomère et la charge renforçante de la composition de caoutchouc. Leur Tg est typiquement inférieure à -20°C, préférentiellement inférieure à -40°C. Toute huile d'extension hydrocarbonée ou tout agent plastifiant liquide hydrocarboné connu pour ses propriétés plastifiantes vis-à-vis d'élastomères diéniques est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Comme agents plastifiants liquides hydrocarbonés, on peut citer les polymères diéniques liquides, les huiles polyoléfiniques, les huiles naphténiques, les huiles paraffiniques, les huiles DAE, les huiles MES (*Medium Extracted Solvates*), les huiles TDAE (*Treated Distillate Aromatic Extracts*)*,* les huiles RAE (*Residual Aromatic Extract oils*), les huiles TRAE (*Treated Residual Aromatic Extract*) et les huiles SRAE (*Safety Residual Aromatic Extract oils*), les huiles minérales, et les mélanges de ces composés.

De préférence, l'agent plastifiant liquide hydrocarboné est choisi dans le groupe constitué par les polymères diéniques liquides, les huiles polyoléfiniques aliphatiques, les huiles paraffiniques, les huiles MES, les huiles TDAE, les huiles TRAE, les huiles SRAE, les huiles minérales et leurs mélanges. De manière plus préférentielle, l'agent plastifiant liquide hydrocarboné est un polymère diénique liquide, une huile polyoléfine aliphatique, une huile paraffinique, une huile MES ou leurs mélanges.

La composition de caoutchouc, avant réticulation, peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le soufre ou le donneur de soufre et l'accélérateur de vulcanisation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en œuvre complémentaires et autres additifs divers, à l'exception système de réticulation. La durée totale du malaxage, dans cette phase non-productive, est de préférence comprise entre 1 et 15 min. Après refroidissement du mélange ainsi obtenu au cours de la première phase non-productive, on incorpore alors le à basse température, généralement dans un mélangeur externe tel qu'un mélangeur à cylindres; le tout est alors mélangé (phase productive) pendant quelques minutes, par exemple entre 2 et 15 min.

La composition de caoutchouc peut être calandrée ou extrudée sous la forme d'une feuille ou d'une plaque, notamment pour une caractérisation au laboratoire, ou encore sous la forme d'un semi-fini (ou profilé) de caoutchouc utilisable dans un pneumatique. La composition peut être soit à l'état cru (avant réticulation ou vulcanisation), soit à l'état cuit (après réticulation ou vulcanisation), peut être un produit semi-fini qui peut être utilisé dans un pneumatique.

Le pneumatique comportant une bande de roulement, autre objet de l'invention, comprend une composition de caoutchouc conforme à l'invention, de préférence dans la bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemple

### II.1 Tests et mesures :

### II.1-1 Détermination de la microstructure des élastomères :

La caractérisation spectrale et les mesures de la microstructure des copolymères d'éthylène- et du 1,3-myrcène sont réalisées par spectroscopie de Résonance Magnétique Nucléaire (RMN).

Spectromètre : Pour ces mesures, un spectromètre Bruker Avance III HD 400 MHz est utilisé, équipé d'une sonde Bruker cryo-BBFO z-grad 5 mm.

Expériences : Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétition de 128 et un nombre d'incréments de 128. Les expériences sont réalisées à 25 °C.

Préparation de l'échantillon : 25 mg d'échantillon sont solubilisés dans 1 mL de chloroforme deutéré (CDCI3).

Calibration de l'échantillon : Les axes des déplacements chimiques ¹H et ¹³C sont calibrés par rapport à l'impureté protonée du solvant (CHCl₃) à δ_{1H} = 7,2 ppm et δ_{13C} = 77 ppm. Attribution spectrale pour les copolymères d'éthylène-et du 1,3-myrcène (voir Chem 1) :
Dans la représentation Chem 1, les symboles R₁ et R₂ représentent les points de rattachement de l'unité à la chaîne polymère. Dans la représentation Chem 1, les signaux des formes d'insertion du 1,3-diène A, B et C ont été observés sur les différents spectres enregistrés. D'après S. Georges *et al.,* (S. Georges, M. Bria, P. Zinck and M. Visseaux, Polymer 55 (2014) 3869-3878), le signal du groupement -CH= n°8" caractéristique de la forme C présente des déplacements chimiques ¹H et ¹³C identiques au groupement -CH= n°3.

Les déplacements chimiques des signaux caractéristiques des motifs A, B et C sont présentés dans le tableau 1. Les motifs A, B et C correspondent respectivement aux unités de configuration 3,4 , de configuration 1,2 et de configuration 1,4-trans.

Les quantifications ont été effectuées à partir de l'intégration des spectres RMN 1D ¹H à l'aide du logiciel Topspin.

Les signaux intégrés pour la quantification des différents motifs sont :
Ethylène : signal à 1.2 ppm correspondant à 4 protons.
Myrcène total : signal n°1 (1.59 ppm) correspondant à 6 protons.
Forme A : signal n°7 (4.67 ppm) correspondant à 2 protons.
Forme B : signal n°8' (5.54 ppm) correspondant à 1 protons.

La quantification de la microstructure est réalisée en pourcentage molaire (% molaire) comme suit : % molaire d'un motif = intégrale 1H d'un motif * 100 / Σ (intégrales 1H de chaque motif)

**Tableau 1**

| Tableau 1 : Attribution des signaux ¹H et ¹³C de copolymères Ethylène-Myrcène | | |
|---|---|---|
| **δ_{1H} (ppm)** | **δ_{13C} (ppm)** | **Groupement** |
| **5.54** | 146.4 | 8' |
| **5.07** | 124.6 | 3 + 8" |
| **4.97 - 4.79** | 112.0 | 9' |
| **4.67** | 108.5 | 7 |
| **2.06** | 26.5 | 4 |
| | 31.8 | 5 + 5' + 5" |
| **2.0 - 1.79** | 44.5 | 8 |
| **1.59** | 25.9 et 17.0 | 1 |
| **1.2** | 36.8 - 24.0 | CH₂ éthylène |

Les quantifications ont été effectuées à partir de l'intégration des spectres RMN 1D ¹H à l'aide du logiciel Topspin.

Les signaux intégrés pour la quantification des différents motifs sont :
Ethylène : signal à 1.2 ppm correspondant à 4 protons,
Myrcène total : signal n°1 (1.59 ppm) correspondant à 6 protons,
Forme A : signal n°7 (4.67 ppm) correspondant à 2 protons,
Forme B : signal n°8' (5.54 ppm) correspondant à 1 protons.

La quantification de la microstructure est réalisée en pourcentage molaire (% molaire) comme suit : % molaire d'un motif = intégrale 1H d'un motif * 100 / Σ (intégrales 1H de chaque motif).

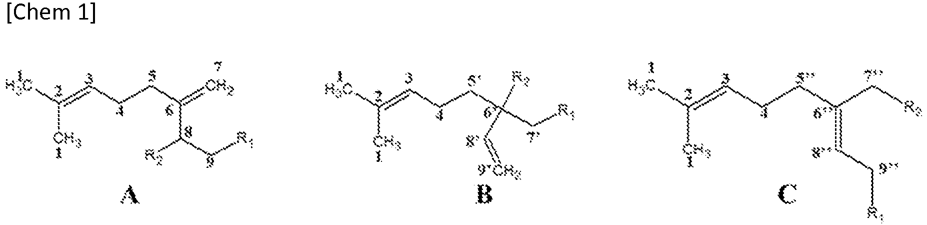

### II.1-2 Détermination de la température de transition vitreuse des polymères :

La température de transition vitreuse est mesurée au moyen d'un calorimètre différentiel ("Differential Scanning Calorimeter") selon la norme ASTM D3418 (1999).

### II.1-3 Rigidité et hystérèse des compositions de caoutchouc :

Les propriétés dynamiques sont mesurées sur un viscoanalyseur (Metravib VA4000), selon la norme D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné à contrainte imposée de 0,7 MPa et à une fréquence de 10 Hz, lors d'un balayage en température, d'une température minimale inférieure à la Tg des élastomères des compositions jusqu'à une température maximale supérieure à 100°C. Les résultats exploités sont le module complexe de cisaillement dynamique (G*) et le facteur de perte tand; les valeurs de G* sont prises à la température de 60°C et le facteur de perte tand à 20°C et 40°C.

Les résultats de rigidité et d'hystérèse sont exprimés en base 100 par rapport à un témoin pris comme référence. Une valeur inférieure à 100 indique une valeur plus faible que celle du témoin.

### II.2 Synthèse des polymères :

Dans la synthèse de copolymères conformes à l'invention, le 1,3-diène utilisé est le myrcène, 1,3-diène de formule (I) dans lequel R est un groupe hydrocarboné ayant 6 atomes de carbone de formule (I).

Dans le myrcène, R répond à la formule CH₂-CH₂-CH=CMe₂.

Tous les réactifs sont obtenus commercialement excepté les métallocènes [{Me₂SiFlu₂Nd(µ-BH₄)₂Li(THF)}] est préparé selon les mode opératoire décrit dans la demande de brevet WO 2007054224.

Le butyloctylmagnésium BOMAG (20% dans l'heptane, C = 0,88 mol L⁻¹) provient de Chemtura et est stocké dans un tube de Schlenk sous atmosphère inerte. L'éthylène, de qualité N35, provient de la société Air Liquide et est utilisé sans purification préalable. Le myrcène (pureté ≥95%) est obtenu chez Sigma-Aldrich.

La viscosité Mooney est mesurée à l'aide d'un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (100°C). Après 1 minute de préchauffage, le rotor tourne au sein de l'éprouvette à 2 tours/minute et on mesure le couple utile pour entretenir ce mouvement après 4 minutes de rotation. La viscosité Mooney (ML) est exprimée en "unité Mooney" (UM, avec 1 UM=0,83 Newton.mètre).

### 2.1- Copolymère d'éthylène et de 1,3-butadiène : élastomère E1

Dans un réacteur contenant à 80°C du méthylcyclohexane, de l'éthylène (Et) et du butadiène (Bd) dans les proportions indiquées dans le tableau 2, on ajoute du butyloctylmagnésium (BOMAG) pour neutraliser les impuretés du réacteur, puis le système catalytique (cf tableau 2). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en butadiène dans les proportions définies dans le tableau 2. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. La viscosité Mooney de E1 est de 85.

Le système catalytique est un système catalytique préformé. Il est préparé dans le méthylcyclohexane à partir d'un métallocène, le [Me₂Si(Flu)₂Nd(µ-BH₄)₂Li(THF)], d'un co-catalyseur, le butyloctylmagnésium (BOMAG), et d'un monomère de préformation, le 1,3-butadiène, dans les teneurs indiquées dans le tableau 2. Il est préparé selon une méthode de préparation conforme au paragraphe II.1 de la demande de brevet WO 2017093654 A1.

### 2.2- Copolymère d'éthylène et de myrcène : élastomère E2

Le polymère est synthétisé selon le mode opératoire suivant :
Dans un réacteur contenant à 80°C du méthylcyclohexane, de l'éthylène et du myrcène (My) dans les proportions indiquées dans le tableau 2, on ajoute du butyloctylmagnésium (BOMAG) pour neutraliser les impuretés du réacteur, puis le système catalytique (cf tableau 2). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en myrcène dans les proportions définies dans le tableau 2. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. La viscosité Mooney de E2 est de 17.

Le système catalytique est un système catalytique préformé. Il est préparé dans le méthylcyclohexane à partir d'un métallocène, le [Me₂Si(Flu)₂Nd(µ-BH₄)₂Li(THF)], d'un co-catalyseur, le butyloctylmagnésium (BOMAG), et d'un monomère de préformation, le 1,3-butadiène, dans les teneurs indiquées dans le tableau 2. Il est préparé selon une méthode de préparation conforme au paragraphe II.1 de la demande de brevet WO 2017093654 A1.

La microstructure des polymères et leurs propriétés figurent dans les tableaux 3 et 4.

### 2.3 Préparation des compositions de caoutchouc :

Des compositions de caoutchouc dont la formulation exprimée en pce (parties en poids pour cent partie d'élastomère) figure dans le tableau 5, ont été préparées selon le mode opératoire suivant : on introduit dans un mélangeur interne (taux de remplissage final :
environ 70% en volume), dont la température initiale de cuve est d'environ 80°C,
successivement le copolymère, la charge renforçante, ainsi que les divers autres ingrédients à l'exception du système de vulcanisation. On conduit alors un travail thermomécanique (phase non-productive) en une étape, qui dure au total environ 5 min, jusqu'à atteindre une température maximale de « tombée » de 150°C. On récupère le mélange ainsi obtenu, on le refroidit puis on incorpore du soufre et l'accélérateur sur un mélangeur (homo-finisseur) à 40 °C, en mélangeant le tout (phase productive) pendant une dizaine de minutes. Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques.

La composition C1 qui contient l'élastomère E1, copolymère d'éthylène et de 1,3-butadiène, est une composition non conforme à l'invention. La composition C2 qui contient l'élastomère E2, copolymère d'éthylène et de myrcène, est une composition conforme à l'invention.

### 2.4 Résultats :

Les résultats figurent dans le tableau 6.

La composition C2 présente une rigidité plus faible que la composition C1 sans que les propriétés d'hystérèse ne soient affectées. Ce résultat est obtenu pour un taux d'unité diénique comparable (14% pour l'élastomère E1, 13% pour l'élastomère E2) et un taux d'unité éthylène bien plus élevé pour E2 que pour E1 (87% contre 78%). Malgré un taux d'éthylène bien plus élevé, la composition de caoutchouc C2 conforme à l'invention présente un compromis amélioré entre les propriétés de rigidité et d'hystérèse.

**Tableau 2**

| Synthèse | Concentration métallocène (mmol/L) | Concentration agent alkylant (mmol/L) | Ratio molaire monomère préformation/métal Nd | Composition de l'alimentation (%mol Eth/Bdt) | Composition de l'alimentation (%mol Eth/Myr) |
|---|---|---|---|---|---|
| E1 | 0.07 | 0.36 | 90 | 80/20 | - |
| E2 | 0.05 | 0.33 | 90 | - | 85/15 |

**Tableau 3 :**

| Elastomère | Ethylène (%mol) | Butadiène (%mol) | 1,2-cyclohexanediyle (%mol) | Myrcène (%mol) | Myrcène 1.4 (%mol / %mol myrcène) | Myrcène 1.2 (%mol / %mol myrcène) | Myrcène 3.4 (%mol / %mol myrcène) |
|---|---|---|---|---|---|---|---|
| E1 | 78 | 14 | 8 | - | - | - | - |
| E2 | 87 | - | - | 13 | 31 | 7 | 62 |

**Tableau 4 :**

| Elastomère | Tg (°C) | Cristallinité (%) |
|---|---|---|
| E1 | -40 | 5 |
| E2 | -58 | 17 |

**Tableau 5**

| Composition | C1 | C2 |
|---|---|---|
| Elastomère E1 | 100 | 0 |
| Elastomère E2 | 0 | 100 |
| Noir de carbone (1) | 3 | 3 |
| Silice (2) | 76 | 76 |
| Agent plastifiant liquide (3) | 22 | 22 |
| Résine plastifiante (4) | 51 | 51 |
| Antioxydant (5) | 2 | 2 |
| Cire antiozonante | 2 | 2 |
| Agent de couplage (6) | 6 | 6 |
| Acide stéarique (7) | 2 | 2 |
| DPG (8) | 1.5 | 1.5 |
| ZnO (9) | 1 | 1 |
| Accélérateur (10) | 2 | 2 |
| Soufre | 1 | 1 |

| | | |
|---|---|---|
| (1) N234 (2) "Zeosil 1165 MP" de Solvay-Rhodia sous forme de microperles (3) MES/HPD (Catenex SNR de Shell) (4) Résine hydrocarbonée C9/Dicyclopentadiène «Escorez 5600» de la société EXXON (Tg = 55°C) (5) N-1,3-diméthylbutyl-N-phényl-para-phenyldiamine (« Santoflex 6-PPD » de Flexsys) (6) TESPT ("Si69" de Evonik) (7) Stéarine « Pristerene 4931 » de Uniquema (8) Diphénylguanidine (9) Oxyde de Zinc de grade industriel de Umicore (10) N-cyclohexyl-2-benzothiazol-sulfénamide (« Santocure CBS » de Flexsys) | | |

**Tableau 6**

| Composition | C1 | C2 |
|---|---|---|
| G* 60°C | 100 | 51 |
| tanδ 20°C | 100 | 95 |
| tanδ 40°C | 100 | 100 |

## Revendications

1. Composition de caoutchouc qui comprend une charge renforçante, un système de réticulation et plus de 50 à 100 pce d'un élastomère qui est un copolymère d'éthylène et d'un 1,3-diène de formule (I),
CH₂=CR-CH=CH₂ (l)
le symbole R représentant une chaîne hydrocarbonée ayant 3 à 20 atomes de carbone.

2. Composition de caoutchouc selon la revendication 1 dans laquelle le copolymère contient des unités éthylène qui représentent entre 50% et 95% en moles des unités éthylène et des unités du 1,3-diène.

3. Composition de caoutchouc selon l'une quelconque des revendications 1 à 2 dans laquelle le copolymère contient des unités éthylène qui représentent au moins 60%, de préférence au moins 70% en mole des unités éthylène et des unités du 1,3-diène.

4. Composition de caoutchouc selon l'une quelconque des revendications 1 à 3 dans laquelle le copolymère contient des unités éthylène qui représentent au plus 90% en mole des unités éthylène et des unités du 1,3-diène.

5. Composition de caoutchouc selon l'une quelconque des revendications 1 à 4 dans laquelle le copolymère contient des unités éthylène qui représentent au plus 85% en mole des unités éthylène et des unités du 1,3-diène.

6. Composition de caoutchouc selon l'une quelconque des revendications 1 à 5 dans laquelle le symbole R représente une chaîne aliphatique.

7. Composition de caoutchouc selon l'une quelconque des revendications 1 à 6 dans laquelle le symbole R représente une chaîne hydrocarbonée ayant 6 à 16 atomes de carbone.

8. Composition de caoutchouc selon l'une quelconque des revendications 1 à 7 dans laquelle le symbole R représente une chaîne acyclique.

9. Composition de caoutchouc selon l'une quelconque des revendications 1 à 8 dans laquelle le symbole R représente une chaîne linéaire ou ramifiée.

10. Composition de caoutchouc selon l'une quelconque des revendications 1 à 9 dans laquelle le copolymère a une température de transition vitreuse inférieure à -35°C, de préférence comprise entre -90°C et -35°C, la température de transition vitreuse étant mesurée au moyen d'un calorimètre différentiel ("Differential Scanning Calorimeter") selon la norme ASTM D3418 (1999).

11. Composition de caoutchouc selon l'une quelconque des revendications 1 à 10 dans laquelle le copolymère contient des unités du 1,3-diène de configuration 1,2 ou 3,4 qui représentent plus de 50% en mole des unités du 1,3-diène.

12. Composition de caoutchouc selon l'une quelconque des revendications 1 à 11 dans laquelle le 1,3-diène est le myrcène ou le β-farnésène.

13. Composition de caoutchouc selon l'une quelconque des revendications 1 à 12 dans laquelle la charge renforçante est une silice, un noir de carbone ou un mélange d'un noir de carbone et d'une silice.

14. Composition de caoutchouc selon l'une quelconque des revendications 1 à 13, laquelle composition comprend un plastifiant, de préférence une résine plastifiante hydrocarbonée.

15. Pneumatique comportant une bande de roulement, lequel pneumatique comprend une composition de caoutchouc définie à l'une quelconque des revendications 1 à 14.

## Patentansprüche

1. Kautschukzusammensetzung, umfassend einen Verstärkungsfüllstoff, ein Vernetzungssystem und mehr als 50 bis 100 Teile eines Elastomers, das ein Copolymer von Ethylen und einem 1,3-Dien der Formel (I) ist,
CH₂=CR-CH=CH₂ (I)
wobei das Symbol R für eine Kohlenwasserstoffkette mit 3 bis 20 Kohlenstoffatomen steht.

2. Kautschukzusammensetzung nach Anspruch 1, wobei das Copolymer zwischen 50 Mol-% und 95 Mol-% Ethyleneinheiten enthält, bezogen auf die Ethyleneinheiten und die 1,3-Dieneinheiten.

3. Kautschukzusammensetzung nach einem der Ansprüche 1 bis 2, wobei das Copolymer mindestens 60 Mol-%, vorzugsweise mindestens 70 Mol-% Ethyleneinheiten enthält, bezogen auf die Ethyleneinheiten und die 1,3-Dieneinheiten.

4. Kautschukzusammensetzung nach einem der Ansprüche 1 bis 3, wobei das Copolymer höchstens 90 Mol-% Ethyleneinheiten enthält, bezogen auf die Ethyleneinheiten und die 1,3-Dieneinheiten.

5. Kautschukzusammensetzung nach einem der Ansprüche 1 bis 4, wobei das Copolymer höchstens 85 Mol-% Ethyleneinheiten enthält, bezogen auf die Ethyleneinheiten und die 1,3-Dieneinheiten.

6. Kautschukzusammensetzung nach einem der Ansprüche 1 bis 5, wobei das Symbol R für eine aliphatische Kette steht.

7. Kautschukzusammensetzung nach einem der Ansprüche 1 bis 6, wobei das Symbol R für eine Kohlenwasserstoffkette mit 6 bis 16 Kohlenstoffatomen steht.

8. Kautschukzusammensetzung nach einem der Ansprüche 1 bis 7, wobei das Symbol R für eine acyclische Kette steht.

9. Kautschukzusammensetzung nach einem der Ansprüche 1 bis 8, wobei das Symbol R für eine lineare oder verzweigte Kette steht.

10. Kautschukzusammensetzung nach einem der Ansprüche 1 bis 9, wobei das Copolymer eine Glasübergangstemperatur von weniger als -35 °C hat, vorzugsweise zwischen -90 °C und -35 °C, wobei die Glasübergangstemperatur mit einem Differentialkalorimeter ("Differential Scanning Calorimeter") gemäß dem Standard ASTM D3418 (1999) gemessen wird.

11. Kautschukzusammensetzung nach einem der Ansprüche 1 bis 10, wobei das Copolymer mehr als 50 Mol-% 1,3-Dieneinheiten in der Konfiguration 1,2 oder 3,4 enthält, bezogen auf die 1,3-Dieneinheiten.

12. Kautschukzusammensetzung nach einem der Ansprüche 1 bis 11, wobei es sich bei dem 1,3-Dien um Myrcen oder β-Farnesen handelt.

13. Kautschukzusammensetzung nach einem der Ansprüche 1 bis 12, wobei der Verstärkungsfüllstoff ein Siliciumdioxid, ein Ruß oder eine Mischung aus Ruß und einem Siliciumdioxid ist.

14. Kautschukzusammensetzung nach einem der Ansprüche 1 bis 13, wobei die Zusammensetzung einen Weichmacher umfasst, vorzugsweise ein Kohlenwasserstoffweichmacherharz.

15. Reifen, der eine Lauffläche umfasst, wobei der Reifen eine Kautschukzusammensetzung gemäß einem der Ansprüche 1 bis 14 umfasst.

## Claims

1. Rubber composition which comprises a reinforcing filler, a crosslinking system and more than 50 to 100 phr of an elastomer which is a copolymer of ethylene and of a 1,3-diene of formula (I),
CH₂=CR-CH=CH₂ (I)
the symbol R representing a hydrocarbon chain having from 3 to 20 carbon atoms.

2. Rubber composition according to Claim 1, in which the copolymer contains ethylene units which represent between 50 mol% and 95 mol% of the ethylene units and of the units of the 1,3-diene.

3. Rubber composition according to either one of Claims 1 and 2, in which the copolymer contains ethylene units which represent at least 60 mol%, preferably at least 70 mol% of the ethylene units and of the units of the 1,3-diene.

4. Rubber composition according to any one of Claims 1 to 3, in which the copolymer contains ethylene units which represent at most 90 mol% of the ethylene units and of the units of the 1,3-diene.

5. Rubber composition according to any one of Claims 1 to 4, in which the copolymer contains ethylene units which represent at most 85 mol% of the ethylene units and of the units of the 1,3-diene.

6. Rubber composition according to any one of Claims 1 to 5, in which the symbol R represents an aliphatic chain.

7. Rubber composition according to any one of Claims 1 to 6, in which the symbol R represents a hydrocarbon chain having from 6 to 16 carbon atoms.

8. Rubber composition according to any one of Claims 1 to 7, in which the symbol R represents an acyclic chain.

9. Rubber composition according to any one of Claims 1 to 8, in which the symbol R represents a linear or branched chain.

10. Rubber composition according to any one of Claims 1 to 9, in which the copolymer has a glass transition temperature below -35°C, preferably between -90°C and -35°C, the glass transition temperature being measured by means of a differential calorimeter (differential scanning calorimeter) according to standard ASTM D3418 (1999).

11. Rubber composition according to any one of Claims 1 to 10, in which the copolymer contains units of the 1,3-diene of 1,2 or 3,4 configuration which represent more than 50 mol% of the units of the 1,3-diene.

12. Rubber composition according to any one of Claims 1 to 11, in which the 1,3-diene is myrcene or β-farnesene.

13. Rubber composition according to any one of Claims 1 to 12, in which the reinforcing filler is a silica, a carbon black or a mixture of a carbon black and a silica.

14. Rubber composition according to any one of Claims 1 to 13, which composition comprises a plasticizer, preferably a hydrocarbon plasticizing resin.

15. Tyre comprising a tread, which tyre comprises a rubber composition defined in any one of Claims 1 to 14.
